# EUROPÄISCHE PATENTSCHRIFT

(11) **EP 1 853 105 B1**
(45) Veröffentlichungstag und Bekanntmachung des Hinweises auf die Patenterteilung: **27.05.2009**
(21) Anmeldenummer: 06722556.5
(22) Anmeldetag: 28.02.2006
(51) Int. Cl.: A01C 7/10, A01B 79/00

(54) **EINZELKORNSÄMASCHINE**
PRECISION SEEDER
SEMOIR MONOGRAINE

(30) Priorität: 02.03.2005 DE 102005011004
(43) Veröffentlichungstag der Anmeldung: 14.11.2007
(73) Patentinhaber: WTK-Electronik GmbH, 01844 Neustadt in Sachsen (DE)
(72) Erfinder: WAGNER, Jürgen, 01904 Neukirch (DE); PALMER, Matthias, 02681 Schirgiswalde (DE); WULSCHNER, Jens, 01844 Neustadt (DE)
(74) Vertreter: Grüneberg, Marcus
(86) Internationale Anmeldenummer: PCT/DE2006/000390
(87) Internationale Veröffentlichungsnummer: WO 2006/092133

(56) Entgegenhaltungen:
- EP-A- 1 415 523
- US-A- 6 070 539
- US-B1- 6 553 299

## Beschreibung

Die Erfindung betrifft im Allgemeinen eine Einzelkornsämaschine mit mehreren angetriebenen Einzelkornsaatgeräten, die über die Arbeitsbreite am Rahmen eines Anbaugerätes verteilt angeordnet sind und jeweils einen eigenen Antrieb aufweisen. Im Besonderen betrifft die Erfindung eine Steuer- und Regeleinrichtung für eine derartige Einzelkornsämaschine.

Einzelkornsämaschinen mit Einzelkornsaatgeräten werden in der Landwirtschaft zur reihenweisen Ablage von Saatgut verwendet. Üblicherweise ist die Einzelkornsämaschine mit einer der Anzahl der Einzelkornsaatgeräte entsprechenden Anzahl von Saatgutvorratsbehältern bestückt, so dass auch gezielt unterschiedliche Saatgutsorten gleichzeitig ausgesät werden können oder eine Fahrgassenschaltung realisiert werden kann.

Um einen gleichmäßigen Abstand der Saatkörner im Boden erzielen zu können, ist es erforderlich, dass die Ablage der Saatkörner permanent geregelt wird. Die einzelnen Einzelkornsaatgeräte sind deshalb mit einer zentralen Regeleinrichtung gekoppelt, die zur Verarbeitung der Führungsgröße und Regelgröße und zur Generierung eines oder mehrerer Ausgangssignale als Stellgröße zur Ansteuerung der Antriebsmotoren der Einzelkornsaatgeräte ausgelegt ist.

In der Praxis werden als Führungsgrößen üblicherweise die Fahrgeschwindigkeit oder der zurückgelegte Fahrweg der Einzelkornsämaschine eingesetzt. Diese Führungsgrößen werden durch Sensoren erfasst, die entweder im Bereich eines auf dem Boden abrollenden Laufrads angeordnet sind oder anderweitig, z. B. durch Radarsensoren, ermittelt werden.

Aus dem Stand der Technik ist die DE 42 34 600 C2 vorbekannt, in der eine Sämaschine für Einzelkornsaatgeräte offenbart ist. Hierbei besteht die Sämaschine aus mehreren angetriebenen Einzelkornsaatgeräten, die über die Arbeitsbreite auf Reihenabstand verteilt angeordnet sind sowie einem Wegsensor zum Erfassen des Fahrwegs. Kennzeichnend für diese Erfindung ist, dass jedes Einzelkornsaatgerät einen eigenen Elektroantrieb aufweist, wobei jeder Elektroantrieb unter Verwendung jeweils einer Steuerleitung mit einer zentralen Steuereinrichtung verbunden ist. Die Steuereinrichtung ihrerseits weist einen oder mehrere stufenlos verstellbare(n) Proportionalregler auf, welche die von einem Wegsensor abgegebenen Wegimpulse in Ansteuerimpulse für die Elektroantriebe generieren.

In der DE 102 51 114.4 ist eine Sämaschine beschrieben, die mehrere Säaggregate aufweist, die voneinander beabstandet an einem Rahmen befestigt sind. Jedes Säaggregat weist hierbei einen eigenen Antrieb zur Ablage von Saatgut auf. Ferner ist eine Regelung vorgesehen, die derart ausgelegt ist, dass sie bei einem vorgegebenen Säbild entweder mindestens ein Säaggregat so regelt, dass dieses Säaggregat unter Berücksichtigung der Position der Saatgutablage mindestens eines benachbarten Säaggregats das Saatgut ablegt, oder alle Säaggregate zentral unter Verwendung eines externen Systems zur Positionsbestimmung jedes einzelnen Säaggregats geregelt werden.

In der DE 37 04 308 ist eine Einzelkorndrillmaschine mit einem Zentralrahmen offenbart, wobei an dem Zentralrahmen nebeneinander mehrere Einzelkornsaatgeräte angeordnet sind. Die Einzelkornsaatgeräte werden dabei fahrgeschwindigkeitsabhängig von einem regelbaren Antrieb angetrieben. Kennzeichnend für diese Erfindung ist ein regelbarer Antriebsmotor, der an der Antriebswelle der Einzelkornsaatgeräte angeordnet ist.

Der DE 39 08 665 A1 ist zu entnehmen, dass eine pneumatische Sämaschine eine Vielzahl von Verteilern in Form von umlaufenden Scheiben ausweist, von denen jeder über seinen eigenen Elektromotor verfügt. Die Vorwärtsgeschwindigkeit der Sämaschine wird hierbei durch Wandler erfasst. Die Wandler geben Impulse als Funktion der Vorwärtsgeschwindigkeit an elektronische Einrichtungen aus, die auf die Motoren der Verteiler einwirken.

Eine weitere Einzelkornsämaschine mit einer steuer- und Regeleinrichtung mit den Merkmalen des Oberbegriffs des Anspruchs 1 ist aus der US-B1-6 553 299 bekannt.

Vorgenannte Erfindungen haben im Wesentlichen gemeinsam, dass die mit der zentralen Steuer- und Regeleinheit gekoppelten einzelnen Säaggregate jeweils unter Verwendung je einer Signalleitung mit einem aufbereiteten Steuersignal eines oder mehrerer in der Steuer- und Regeleinheit platzierten Proportionalregler(s) beaufschlagt werden. In den Proportionalreglern werden die von den Proportionalgliedern der zentralen Steuer- und Regeleinheit gelieferten Sollwerte mit den Ist-Drehzahlen, die von integrierten Drehimpulsgebern bereitgestellt werden, der einzelnen Antriebsmotoren verglichen und in Abhängigkeit einer Regeldifferenz nachgeregelt. Die dafür genutzten Signalleitungen übertragen darüber hinaus weitere Informationen, was letztlich dazu führt, dass die Anzahl der Signalleitungen entsprechend groß gewählt ist. Darüber hinaus weist eine zentrale Regelung der einzelnen Säaggregate den Nachteil auf, dass Sämaschinen mit einer unterschiedlichen Anzahl von Säaggregaten wegen der unterschiedlichen Anzahl von Proportionalreglern auch unterschiedliche zentrale Steuer- und Regeleinrichtungen benötigen.

Die Aufgabe der Erfindung besteht nunmehr darin, eine Steuer- und Regeleinrichtung für eine Einzelkornsämaschine mit mehreren angetriebenen Einzelkornsaatgeräten vorzuschlagen, die flexibler und weniger störanfällig ist und eine problemlosere Nachrüstung und Einbindung von weiteren Einzelkornsaatgeräten ermöglicht.

Diese Aufgabe wird durch die lehre des Patentanspruchs 1 gelöst. Zur Ansteuerung jedes Antriebsmotors ist dabei ein Regler vorgesehen, wobei diese Regler mit einem Steuersignal eines Koppelrechners beaufschlagbar ausgebildet sind. Während im Stand der Technik die Regler zentral im Koppelrechner platziert sind, werden die Regler erfindungsgemäß dezentral an den Einzelkornsaatgeräten angeordnet und sind mit dem als Steuereinheit ausgebildeten Koppelrechner mittels Signalleitungen verbunden. Davon ausgehend weist jedes Einzelkornsaatgerät erfindungsgemäß jeweils eine eigene dezentrale Regeleinheit mit Regler und Regelkreis auf. Die Regler sind dabei derart ausgebildet, um das von dem Koppelrechner gelieferte und nicht transformierte weg- oder geschwindigkeitsabhängige Signal in Ansteuersignale für die zugehörigen Antriebsmotoren zu generieren.

Entgegen dem Stand der Technik weist die erfindungsgemäße Steuereinheit nunmehr keine(n) Regler mehr auf und übernimmt damit weder eine Regelfunktion noch die Aufbereitung der Regelungssignale. Die gesamten Regelfunktionen der Einzelkornsaatgeräte sind nunmehr den einzelnen dezentralen Regeleinheiten der Einzelkornsaatgeräte übertragen worden. Der Koppelrechner führt nur noch Steuerfunktionen aus und leitet die unbearbeiteten oder untransformierten weg- oder geschwindigkeitsabhängigen Signale an die Regeleinheiten der Einzelkornsaatgeräte weiter. Die Umwandlung dieser weitergeleiteten Signale in Ansteuersignale für die Antriebsmotoren der Einzelkornsaatgeräte erfolgt ausschließlich durch die Regeleinheiten der Einzelkornsaatgeräte selbst.

Der als Steuereinheit ausgebildete Koppelrechner ist sowohl mit den Reglern der Einzelkornsaatgeräte als auch mit einem Bedienterminal unter Verwendung von als Datenbus-Leitungen ausgebildeten Signalleitungen gekoppelt. Die Datenbus-Leitungen übertragen erfindungsgemäß neben den untransformierten weg- oder geschwindigkeitsabhängigen Signalen die vom Bediener am Bedienterminal vorgegebenen Regelgrößen, beispielsweise ein geänderter Saatkornabstand und die Informationen über eine gewünschte Zu- und Abschaltung einzelner Einzelkornsaatgeräte.

Der Koppelrechner ist demnach allen dezentralen Regeleinheiten der Einzelkornsaatgeräte vorgeschaltet und dient zur Kopplung der Regeleinheiten mit der Bedieneinheit. In einer bevorzugten Ausgestaltung der Erfindung übernimmt der als Steuereinheit ausgebildete Kopperechner zusätzlich zur Kommunikation mit dem Bedienterminal auch Steueraufgaben der Sämaschine, beispielsweise für den Klapprahmen, den Spurreißer oder das Fahrwerk.

Als Verbindung zwischen dem Bedienterminal und der Steuereinheit wird bevorzugt der für Fahrzeuge oft genutzte ISOBUS und für die Verbindung zwischen der Steuereinheit und den dezentralen Regeleinheiten der Einzelkornsaatgeräte der LIN-BUS vorgesehen.

Alle Datenbus-Leitungen zwischen der Steuereinheit und den dezentralen Regeleinheiten der Einzelkornsaatgeräte weisen Schaltglieder auf, die naturgemäß zu- und abschaltbar ausgebildet sind. Bevorzugt werden als Schaltglieder Relais oder Halbleiter eingesetzt. Dadurch kann jedes Einzelkornsaatgerät entsprechend der Anbauposition von der Steuereinheit separat mit einer eindeutigen Adresse initialisiert werden.

Am Ende des Initialisierungsvorgangs werden die Datenbus-Leitungen zu allen dezentralen Regeleinheiten unter Verwendung der Schaltelemente zugeschaltet, wodurch eine bidirektionale Kommunikation zwischen der Steuereinheit und allen Regeleinheiten erzielt wird.

Hierbei wird der Vorteil der Erfindung besonders deutlich. Sofern ein Austausch der Einzelkornsaatgeräte mit ihren zugehörigen Regeleinheiten erforderlich ist, können diese ohne Adressierung gemäß ihrer Anbauposition problemlos an der Sämaschine montiert und in das Steuersystem eingebunden werden.

Die dezentralen Regeleinheiten übernehmen jeweils zusätzlich die Funktionen der Saatkornüberwachung, die Funktion der Ansteuerung von Schaltgliedern zu einer Vorauflaufmarkierung an ihren zugeordneten Einzelkornsaatgeräten sowie die Funktion der Alarmmeldung im Fehlerfall.

In einer besonders bevorzugten Ausgestaltung der Erfindung sind die dezentralen Regeleinheiten derart ausgebildet, um auch Antriebe für Granulat-Streuer und andere Dosierantriebe regeln zu können. Damit erweitert sich das Anwendungsspektrum des Gegenstandes der Erfindung beträchtlich.

Die Einzelkornsaatgeräte umfassen, wie bereits erwähnt, einen separaten Antriebsmotor mit Drehimpulsgeber. Das Signal des Drehimpulsgebers dient dabei als Grundlage für die Drehzahlregelung des als Elektromotor ausgebildeten Antriebsmotors. Erfindungsgemäß umfassen die Einzelkornsaatgeräte einen zusätzlichen Säscheiben-Sensor, der die Signale einer im Fahrzustand der Sämaschine rotierenden Säscheibe erfasst. Die Säscheibe weist hierbei mehrere Säradzellen oder Markierungen auf, die identisch ausgebildet sind bzw. mit gleichem Abstand auf der Säscheibe zueinander platziert sind. Pro Markierung bzw. pro durchlaufener Säradzelle wird durch den Säscheiben-Sensor ein Signal erfasst, welches als Steuergröße für die weitere Dosierung eingesetzt wird. Der Säscheiben-Sensor kann somit die Anzahl der Säradzellen und die Drehwinkelpositionen der Säscheibe erfassen. Die Platzierung des Säscheiben-Sensors erfolgt dazu besonders vorteilhaft genau an der Abwurfstelle des Einzelkorns oder genau am Umfang der Säscheibe gegenüber der Abwurfstelle.

Somit vereinfacht sich ein Austausch der Säscheibe, da der Bediener weder an dem als Steuereinheit ausgebildeten Koppelrechner noch an den der Säscheibe zugeordneten dezentralen Regeleinheiten Eingriffe vornehmen muss.

Mit Hilfe des Säscheiben-Sensors sowie des Drehimpulsgebers ist die dezentrale Regeleinheit jedes Einzelkornsaatgeräts in der Lage, die Säscheibe in eine definierte Start-Winkel-Position zu bringen. Diese Start-Winkel-Position kann als Kornversatz, respektive Offset, in Fahrtrichtung relativ zu einer definierten Start-Null-Position unter Verwendung der Datenbus-Leitung jedem einzelnen Säaggregat vorgegeben werden. Der Vorteil besteht darin, dass die einzelnen Einzelkornsaatgeräte der Einzelkornsämaschine synchronisiert werden können. Das heißt, dass eine Kornablage durch die Einzelkornsaatgeräte gleichzeitig oder nach einem anderweitig gewünschtem Säbild, beispielsweise eine versetzte Anordnung der Körner, erfolgen kann.

Die signifikanten Vorteile und Merkmale der Erfindung gegenüber dem Stand der Technik sind im Wesentlichen:
- Übertragung der Regelaufgaben von der Zentraleinheit auf die dezentralen Regeleinheiten der Einzelkornsaatgeräte,
- exaktere und flexiblere Regelung der Einzelkornsaatgeräte,
- die Signalleitungen zwischen der Steuereinheit und den Einzelkornsaatgeräten müssen nur noch wenige Signale bzw. Informationen übertragen,
- Möglichkeit der Synchronisation der einzelnen Einzelkornsaatgeräte durch Verwendung des Drehimpulsgebers in Verbindung mit einem Säscheiben-Sensor und
- Möglichkeit des Austausches von Säscheiben mit unterschiedlichen Zellenanzahlen ohne manuelle Parametereinstellung bzw. Korrektur zur Zellenanzahl.

Weitere Merkmale und Vorteile der Erfindung erschließen sich dem Fachmann des Weiteren aus der folgenden detaillierten Beschreibung einer bevorzugten Ausführungsform im Hinblick auf die einzige anliegende Zeichnungen; in dieser zeigt:

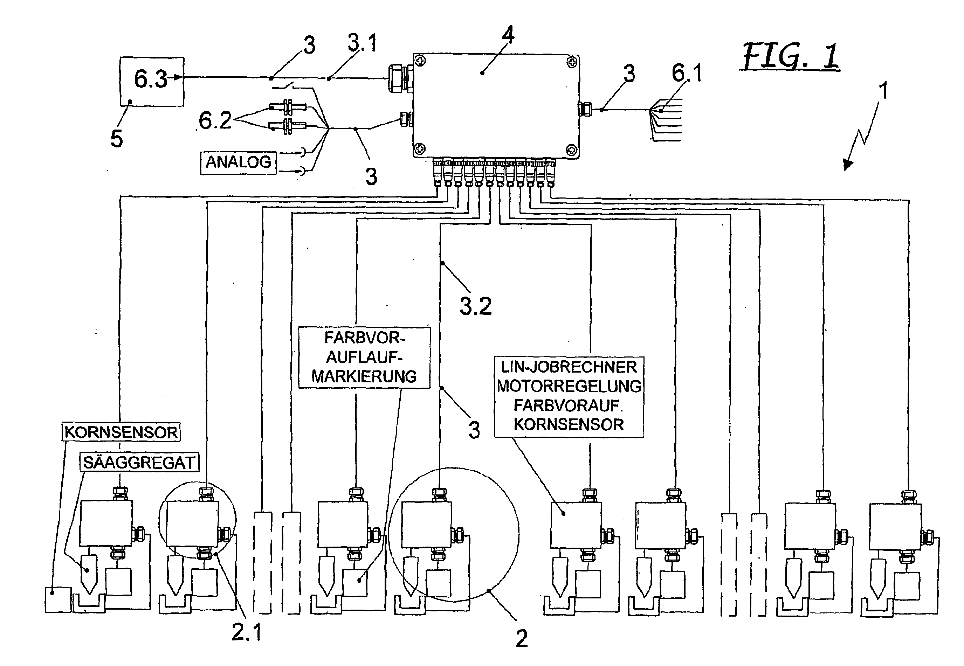

- Fig.1:: Schaltschema der erfindungsgemäßen Steuer- und Regeleinrichtung für eine Einzelkornsämaschine mit mehreren angetriebenen Einzelkornsaatgeräten.

Die Fig. 1 illustriert ein Schaltschema der erfindungsgemäßen Steuer- und Regeleinrichtung 1 für eine Einzelkornsämaschine mit mehreren angetriebenen Einzelkornsaatgeräten 2. Die Steuer- und Regeleinrichtung 1 umfasst eine auf der Einzelkornsämaschine angeordnete Steuereinheit 4, die unter Verwendung einer ISOBUS-Datenleitung 3.2 mit einem Bedienterminal 5 gekoppelt ist. Ferner sind mehrere Einzelkornsaatgeräte 2 mit jeweils einer dezentralen Regeleinheit 2.1 vorgesehen, die jeweils mittels einer LIN-BUS-Datenleitung 3.1 mit der Steuereinheit 4 gekoppelt sind. Das Bedienterminal 5 befindet sich in der Regel in der Fahrerkabine der Zugmaschine und dient der Informationsübertragung der vom Bediener des Bedienterminals vorgegebenen Sollgrößen 6.3, beispielsweise ein geänderter Saatkornabstand und die Informationen über eine gewünschte Zu- und Abschaltung einzelner Einzelkornsaatgeräte 2, über die Steuereinheit 4 zu den einzelnen dezentralen Regeleinheiten 2.1 der Einzelkornsaatgeräte 2. Die Einzelkornsaatgeräte 2 sind dabei auf Arbeitsbreite verteilt auf einem Rahmen eines nicht näher beschriebenen Anbaugerätes angeordnet. Dem Koppelrechner 4 werden neben den vorgenannten Informationen auch weg- oder geschwindigkeitsabhängige Signale 6.2 zugeführt, welche unbearbeitet bzw. untransformiert den dezentralen Regeleinheiten 2.1 der Einzelkornsaatgeräte 2 zugeleitet werden. Außerdem kann die Steuereinheit 4 Steueraufgaben der Einzelkornsämaschine 6.1, beispielsweise für den Klapprahmen, den Spurreißer oder das Fahrwerk übernehmen. Die dafür notwendigen Signalausgänge sind an der vom Betrachter ausgehenden rechten Seite der Steuereinheit 4 gezeigt. Neben den dezentralen Regeleinheiten 2.1 weisen die Einzelkornsaatgeräte 2 jeweils einen separaten Antriebsmotor mit einem Drehimpulsgeber auf. Zusätzlich ist im Einzelkornsaatgerät 2 noch ein Säscheiben-Sensor vorgesehen, der die Signale einer im Fahrzustand der Sämaschine rotierenden Säscheibe erfasst. Die dezentralen Regeleinheiten 2.1 der Einzelkornsaatgeräte 2 verarbeiten zum einen die untransformierten weg- oder geschwindigkeitsabhängigen Signale der Steuereinheit 4 sowie die vom Bediener am Bedienterminal vorgegebenen Sollgrößen 6.3, beispielsweise ein geänderter Saatkornabstand. Dadurch, dass die Signalverarbeitung und Signalgenerierung anstelle in der Steuereinheit 4 erfindungsgemäß in den dezentralen Regeleinheiten 2.1 der Einzelkornsaatgeräte 2 erfolgt, konnten die Anzahl der den Koppelrechner 4 mit den Einzelkornsaatgeräten 2 koppelnden LIN-BUS-Datenleitungen 3.1 erheblich reduziert werden.

### LISTE DER BEZUGSZEICHEN

- 1: Steuer- und Regeleinrichtung
- 2: Einzelkornsaatgerät
- 2.1: dezentrale Regeleinheit
- 3: Signalleitungen
- 3.1: LIN-BUS-Datenleitung
- 3.2: ISOBUS-Datenleitung
- 4: Steuereinheit/Koppelrechner
- 5: Bedienterminal
- 6: Signale
- 6.1: Steuerfunktion Einzelkornsämaschine
- 6.2: weg- oder geschwindigkeitsabhängige Signale
- 6.3: Sollgrößen des Bedieners

## Patentansprüche

1. Steuer- und Regeleinrichtung (1) für eine Einzelkornsämaschine, umfassend:
■ mehrere angetriebene Einzelkornsaatgeräte (2) mit jeweils einem Antriebsmotor und einem Drehimpulsgeber,
■ jedes Einzelkornsaatgerät weist ausschließlich jeweils eine eigene dezentrale Regeleinheit (2.1) mit Regler und Regelkreis zur Ansteuerung des Antriebsmotors auf,
■ einen als reine Steuereinheit ausgebildeten Koppelrechner (4), der mittels Signalleitungen (3) mit den Reglern der Einzelkornsaatgeräte (2) verbunden ist und ein Steuersignal für die Regler liefert,
■ die Regeleinheiten (2.1) generieren das von dem Koppelrechner (4) gelieferte und nicht transformierte weg- oder geschwindigkeitsabhängige Steuersignal (6.2) in Ansteuersignale für die zugehörigen Antriebsmotoren, **dadurch gekennzeichnet, dass**
■ jedes Einzelkornsaatgerät (2) eine Säscheibe mit einem Säscheiben-Sensor zur Synchronisation der einzelnen Säscheiben untereinander aufweist, wobei der Säscheiben-Sensor die Drehbewegung der Säscheibe erfassend ausgebildet ist.

2. Steuer- und Regeleinrichtung (1) nach Anspruch 1, **dadurch** gekenntzeichnet, dass der Koppelrechner (4) sowohl mit den Reglern der Einzelkornsaatgeräte (2) als auch mit einem Bedienterminal (5) unter Verwendung von Signalleitungen (3) gekoppelt ist, wobei die Signalleitungen (3)
a. zur Übertragung der vom Bediener am Bedienterminal (5) vorgegebenen Regelgrößen (6.3), beispielsweise ein geänderter Saatkornabstand und/oder
b. zur Übertragung zentraler Fahrweg- oder Geschwindigkeits-Sensorsignale als Führungsgrößen (6.2) und/oder
c. zur Zu- und Abschaltung einzelner Einzelkornsaatgeräte (2)
ausgelegt sind.

3. Steuer- und Regeleinrichtung (1) nach Anspruch 1 oder 2, **dadurch gekennzeichnet, dass** die dezentralen Regeleinheiten (2.1) jeweils zusätzlich die Funktionen der Saatkornüberwachung und der Ansteuerung von Schaltgliedern zu einer Vorauflaufmarkierung an ihren zugeordneten Einzelkornsaatgeräten (2) übernehmen.

4. Steuer- und Regeleinrichtung (1) nach einem der Ansprüche 1 bis 3, **dadurch gekennzeichnet, dass** die dezentralen Regeleinheiten (2.1) derart ausgebildet sind, um auch Antriebe für Granulat-Streuer und andere Dosierantriebe regeln zu können.

5. Steuer- und Regeleinrichtung (1) nach einem der Ansprüche 1 bis 4, **dadurch gekennzeichnet, dass** die Steuereinheit (4) zusätzlich zur Kommunikation mit dem Bedienterminal (5) auch Steuerfunktionen (6.1), der Einzelkornsämaschine beispielsweise für den Klapprahmen, den Spurreißer oder das Fahrwerk übernimmt.

6. Steuer und Regeleinrichtung (1) nach einem der Ansprüche 1 bis 5, **dadurch gekennzeichnet, dass** die dezentrale Regeleinheit (2.1) jedes Einzelkornsaatgeräts (2) derart ausgebildet ist, um die Anzahl der Säradzellen oder Markierungen seiner Säscheibe als Signal erfassen zu können und dieses Signal als Steuergröße für die weitere Dosierung einsetzen zu können.

7. Steuer- und Regeleinrichtung (1) nach einem der Ansprüche 1 bis 6, **dadurch gekennzeichnet, dass** die dezentrale Regeleinheit (2.1) jedes Einzelkornsaatgeräts (2) derart ausgebildet ist, um die Säscheibe in eine definierte Start-Winkel-Position zu bringen, welche als Kornversatz, respektive Offset, in Fahrtrichtung relativ zu einer definierten Start-Null-Position unter Verwendung der Signalleitungen (3) jedem einzelnen Einzelkornsaatgerät (2) vorgegeben werden kann.

8. Steuer- und Regeleinrichtung (1) nach einem der Ansprüche 1 bis 7, **dadurch gekennzeichnet, dass** die für die Kopplung zwischen den Einzelkornsaatgeräten (2) und der Steuereinheit (4) vorgesehene Signalleitungen (3) als LIN-BUS-Datenleitung und die für die Kopplung zwischen der Steuereinheit (4) und dem Bedienterminal (5) vorgesehene Signalleitungen (3) als ISOBUS-Datenleitung ausgebildet sind.

## Claims

1. Control device (1) for a precision seeder, comprising:
• a plurality of driven precision seeding appliances (2), each provided with a drive motor and a rotary pulse generator,
• each individual precision seeding appliance being provided with a separate decentralised control unit (2.1) with controller and control circuit for controlling the drive motor,
• a coupling calculator (4) established as pure control unit, connected using signal lines (3) to the controllers of the precision seeding appliances (2), supplying the controllers with a control signal,
• the control units (2.1) converting the non-transformed path-dependent or speed-dependent control signal (6.2) supplied by the coupling calculator (4) into controlling signals for the associated drive motors, **characterized by** that
• each precision seeding appliance (2) is provided with a sowing disk equipped with a sowing disk sensor for synchronising the individual sowing disks to each other, the sowing disk sensor being established in such a way that it can detect the rotational movement of the sowing disk.

2. Control device (1) to claim 1 **characterized by** that the coupling calculator (4) is coupled to both the controllers of the precision seeding appliances (2) and a control terminal (5) using signal lines (3), the signal lines (3) being established in such a way as
a. to transmit the control variables (6.3), such as a changed seed grain distance, predetermined by the operator at the control terminal (5), and/or
b. to transmit central traveling distance- or speed-sensor signals as command signals (6.2), and/or
c. to switch on or off individual precision seeding appliances (2).

3. Control device (1) to claim 1 or 2 **characterized by** that the decentralised control units (2.1) each additionally take on the functions of seed grain monitoring and control of switching elements for preemergence marking at the assigned precision seeding appliances (2).

4. Control device (1) to any of claims 1 to 3 **characterized by** that the decentralised control units (2.1) are established in such a way as also to be able to control drives of granules applicators and other metering drives.

5. Control device (1) to any of claims 1 to 4 **characterized by** that the control unit (4), in addition to communicating with the control terminal (5), also takes on control functions (6.1) for the precision seeder such as of the folding frame, the row marker or the travel gear.

6. Control device (1) to any of claims 1 to 5 **characterized by** that the decentralised control unit (2.1) of each individual precision seeding appliance (2) is established in such a way as to be able to detect the number of the sowing disk cells or markings of its associated sowing disk as signal, being able to use said signal as control variable for further metering.

7. Control device (1) to any of claims 1 to 6 **characterized by** that the decentralised control unit (2.1) of each individual precision seeding appliance (2) is established in such a way as to put the sowing disk into a defined start angle position, which can be pregiven to each individual precision seeding appliance (2) as grain offset in direction of travel relative to a defined start zero position using the signal lines (3).

8. Control device (1) to any of claims 1 to 7 **characterized by** that the signal lines (3) provided for the coupling between the precision seeding appliances (2) and the control unit (4) are established as LIN-BUS data lines and the signal lines (3) provided for the coupling between the control unit (4) and the control terminal (5) are established as ISOBUS data lines.

## Revendications

1. Dispositif de commande et de régulation (1) pour un semoir monograine, comportant :
■ plusieurs appareils d'ensemencement monograine (2) commandés, chacun étant doté d'un moteur d'entraînement et d'un générateur d'impulsions de rotation,
■ chaque appareil d'ensemencement monograine présente exclusivement sa propre unité de régulation (2.1) décentralisée avec régulateur et circuit de régulation afin de commander le moteur d'entraînement,
■ un calculateur de couplage (4) uniquement configuré comme unité de commande et connecté aux régulateurs des appareils d'ensemencement monograine (2) au moyen de lignes de signalisation (3) et délivrant un signal de commande aux régulateurs,
■ les unités de régulation (2.1) transforment le signal de commande (6.2), délivré en état non-transformé par le calculateur de couplage (4) et dépendant de la voie ou de la vitesse, en signaux de commande pour les moteurs d'entraînement affectés, **caractérisés en ce que**
■ chaque appareil d'ensemencement monograine (2) présente un disque semeur avec un capteur disque semeur afin de synchroniser les disques semeurs individuels les uns par rapport aux autres, le capteur disque semeur étant configuré de telle façon à ce qu'il capte le mouvement rotatoire du disque semeur.

2. Dispositif de commande et de régulation (1) selon la revendiation 1, **caractérisée en ce que** l'ordinateur de couplage (4) est couplé soit avec les régulateurs des appareils d'ensemencement monograine (2), soit avec un poste de commande (5) au moyen de lignes de signalisation (3), lesquelles lignes de signalisation (3) étant conçues
a. pour la transmission des valeurs à régler (6.3) définies par l'opérateur au poste de commande (5), par exemple le changement de l'intervalle entre les graines de semences et/ou
b. pour la transmission des signaux centraux de voie ou de vitesse fournis par le capteur central comme valeurs de référence (6.2) et/ou
c. pour la mise en et hors circuit d'appareils d'ensemencement monograine (2) individuels.

3. Dispositif de commande et de régulation (1) selon la revendication 1 ou 2, **caractérisé en ce que** les unités de régulation (2.1) décentralisées assument chacune en plus les fonctions de surveillance des graines de semence et de commande des éléments de commutation pour le marquage pré-levée attachés sur leurs appareils d'ensemencement monograine (2) respectifs.

4. Dispositif de commande et de régulation (1) selon une des revendications 1 à 3, **caractérisé en ce que** les unités de régulation (2.1) décentralisées sont configurées de telle sorte qu'elles puissent régler aussi des actionneurs pour épandeurs de granulés ou autres commandes de dosage.

5. Dispositif de commande et de régulation (1) selon une des revendications 1 à 4, **caractérisé en ce que** l'unité de commande (4), outre la communication avec le poste de commande (5), assume des fonctions de commande (6.1), par exemple du semoir monograine pour le châssis repliable, le jalonneur ou le mécanisme de roulement.

6. Dispositif de commande et de régulation (1) selon une des revendications 1 à 5, **caractérisé en ce que** l'unité de régulation (2.1) décentralisée de chaque appareil d'ensemencement monograine (2) est configurée de telle sorte qu'elle puisse capter le nombre des cellules de la roue semeuse ou des marques de son disque semeur en tant que signal et qu'elle puisse utiliser ce signal comme valeur d'influence pour le dosage ultérieur.

7. Dispositif de commande et de régulation (1) selon une des revendications 1 à 6, **caractérisé en ce que** l'unité de régulation (2.1) décentralisée de chaque appareil d'ensemencement monograine (2) est configurée de telle manière qu'elle oriente le disque semeur selon un angle de démarrage défini, lequel peut être prédéfini en tant que décalage, ou offset, de la graine par rapport à une position de démarrage zéro dans la direction du déplacement, et imposée à chaque appareil d'ensemencement monograine (2) au moyen des lignes de signalisation (3).

8. Dispositif de commande et de régulation (1) selon une des revendications 1 à 7, **caractérisé en ce que** les lignes de signalisation (3) prévues pour le raccordement des appareils d'ensemencement (2) à l'unité de commande (4) sont configurées en tant que lignes de transmission de données LIN BUS et que les lignes de signalisation prévues pour le raccordement de l'unité de commande (4) et le poste de commande (5) sont configurées en tant que lignes de transmission de données ISOBUS.
